# EUROPEAN PATENT SPECIFICATION

(11) **EP 4 180 166 B1**
(45) Date of publication and mention of the grant of the patent: **04.11.2026**
(21) Application number: 21861304.0
(22) Date of filing: 17.08.2021
(51) Int. Cl.: B41F 17/36, B41F 33/00, B41J 2/44, A61J 3/00

(54) **DEVICE FOR MARKING EDIBLE BODY, LASER-MARKED EDIBLE BODY, SYSTEM FOR READING MARKING INFORMATION OF EDIBLE BODY, AND MARKING METHOD FOR FORMING A MARKING PATTERN ON AN EDIBLE BODY**
VORRICHTUNG ZUR MARKIERUNG EINES ESSBAREN KÖRPERS, LASERMARKIERTER ESSBARER KÖRPER, SYSTEM ZUM LESEN VON MARKIERUNGSINFORMATIONEN EINES ESSBAREN KÖRPERS UND MARKIERUNGSVERFAHREN ZUR ERZEUGUNG EINES MARKIERUNGSMUSTERS AUF EINEM ESSBAREN KÖRPER
DISPOSITIF DE MARQUAGE D'UN CORPS COMESTIBLE, CORPS COMESTIBLE MARQUÉ AU LASER, SYSTÈME DE LECTURE DE L'INFORMATION DE MARQUAGE DU CORPS COMESTIBLE, ET PROCÉDÉ DE MARQUAGE POUR FORMER UN MOTIF DE MARQUAGE SUR UN CORPS COMESTIBLE

(30) Priority: 24.08.2020 JP 2020140699
(43) Date of publication of application: 17.05.2023
(73) Proprietor: Qualicaps Co., Ltd., Nara 639-1032 (JP)
(72) Inventor: TSUKAMOTO, Masaru, Yamatokoriyama-shi, Nara 639-1032 (JP); HARADA, Shigenobu, Tokyo 100-8251 (JP); SAKURAMOTO, Hiroshi, Yamatokoriyama-shi, Nara 639-1032 (JP); AMANO, Shinji, Yamatokoriyama-shi, Nara 639-1032 (JP); FUJINAKA, Daiya, Yamatokoriyama-shi, Nara 639-1032 (JP)
(74) Representative: Isarpatent
(86) International application number: PCT/JP2021/029990
(87) International publication number: WO 2022/044876

(56) References cited:
- EP-A1- 3 023 187
- EP-A1- 3 616 685
- WO-A1-2018/199201
- WO-A2-2009/150622
- US-A1- 2004 211 844
- US-B2- 8 982 424

## Description

### TECHNICAL FIELD

This invention relates to an edible body marking device, a laser-marked edible body, an edible body marking information reading system, and a marking method for forming a marking pattern on an edible body as defined in claims 1, 4, 5 and 9, respectively.

Further preferred embodiments are defined in the dependent claims.

### BACKGROUND

Adding specific information such as date of manufacture or the manufacturing lot to an edible body such as a tablet or capsule has been conventionally practiced. For example, disclosed in Patent Document 1 is a drug with a two-dimensional data code including information such as drug usage, storage method, date of manufacture, and expiration date recorded on the drug surface. Disclosed in Patent Document 2 is a method of printing a product code to help detect counterfeit items, wherein the product code includes a modified character that can be used to detect if the item is counterfeit. Disclosed in Patent Document 3 is a medicine, and to a method for determining the genuineness or spuriousness of a pharmaceutical composition for oral administration, a pharmaceutical composition for oral administration, and a system for determining the genuineness or spuriousness of a pharmaceutical composition for oral administration. Disclosed in Patent Document 4 relates generally to bar coding of products and more specifically, to barcodes which include embedded security features allowing entities to be able to identify between legitimately produced barcodes and associated products and counterfeited barcodes and products.

### RELATED ART

### PATENT DOCUMENT(S)

[Patent Doc.1] JP Laid-Open Patent Application Publication H8-712
[Patent Doc.2] US 8 982 424 B2
[Patent Doc.3] EP 3 616 685 A1
[Patent Doc.4] US 2004/211844 A1

### SUBJECTS TO BE SOLVED BY THE INVENTION(S)

Whereas the above-mentioned drug with the two-dimensional data code can record many pieces of information within a tiny space on the drug surface, because it displays a mechanical pattern whose content is difficult for consumers to understand unlike letters (characters) and the like, the tablet itself can easily generate a sense of discomfort to make the consumers anxious. Also, because anyone can easily grasp the information of a general two-dimensional code using a general-use reading device, there was a problem that manufacturing counterfeit drugs could not be effectively prevented.

Then, the objective of this invention is to offer an edible body marking device, a laser-marked edible body, an edible body marking information reading system, and a marking method for forming a marking pattern on an edible body that can include many pieces of information without giving a sense of discomfort to consumers and are also effective as a measure to prevent counterfeit drugs.

### SOLUTION TO PROBLEM

The above objective is achieved with an edible body marking device that forms a marking pattern on an edible body by scanning a laser spot on the marking target face of the edible body carried to a marking area, comprising a light source part that emits laser light, a scanning part that scans laser light emitted from the light source part with a galvano scanner, a memory part that memorizes information on a marking pattern, and a control part that controls the output of the light source part and the scanning of the scanning part, wherein the marking pattern includes, as additional information, positional information of one or more index dots that are made by partially deforming one or more dots of the laser spot, with respect to a basic pattern that is obtained by forming a plurality of the dots of the laser spot and part of one of a character, a number, a figure, and a code constituting the basic pattern is made thicker by making the multiple index dots continuously and regarded as the additional information.

With respect to the edible body marking device, the additional information is information based on the number of the dots that are counted from a marking reference point to the one or more index dots of the basic pattern.

The marking pattern may include other basic patterns so that the marking pattern is provided with a plurality of the basic patterns, each of which may include unique additional information that is different from other additional information.

The above objective is achieved with a laser-marked edible body on which the marking pattern is formed by the edible body marking device, wherein the marking pattern includes, as additional information, positional information of one or more index dots that are made by partially deforming one or more dots of the laser spot with respect to a basic pattern that is obtained by forming a plurality of the dots of the laser spot, and part of one of a character, a number, a figure, and a code constituting the basic pattern is made thicker by making the multiple index dots continuously and regarded as the additional information.

The above objective is achieved with an edible body marking information reading system that reads the additional information of the laser-marked edible body on which the marking pattern is formed by the edible body marking device includes an imaging part that images the marking pattern of the edible body, a control part that acquires the additional information based on imaging data of the marking pattern, and a display part that displays output information based on the additional information acquired from the imaging data.

The marking information reading system preferably further includes a marking information memory part that memorizes marking information including information regarding a forming order of dots constituting the basic pattern, wherein the control part acquires the additional information based on the number of the dots that are counted from a marking reference point to the one and more index dots of the basic pattern by referring to the marking information.

It is preferable to further include a conversion table memory part that memorizes a conversion table to convert the additional information to the output information, wherein the control part converts the acquired additional information to the output information based on the conversion table.

The above objective is also achieved with a marking method for forming a marking pattern on an edible body by the edible body marking device, wherein the marking pattern includes, as additional information, positional information of one or more index dots that are made by partially deforming one or more dots of the laser spot with respect to a basic pattern that is obtained by forming a plurality of the dots of the laser spot, and part of one of a character, a number, a figure, and a code constituting the basic pattern is made thicker by making the multiple index dots continuously and regarded as the additional information.

### ADVANTAGE(S) OF THE INVENTION(S)

This invention offers an edible body marking device, a laser-marked edible body an edible body marking information reading system, and a marking method for forming a marking pattern on an edible body that can include many pieces of information without giving a sense of discomfort to consumers and are also effective as a measure to prevent counterfeit drugs.

### BRIEF DESCRIPTIONS OF THE DRAWINGS

Fig. 1 is an outline configuration diagram of an edible body marking device of an embodiment of this invention.
Fig. 2 is an enlarged view of a main part of the edible body marking device shown in Fig. 1.
Fig. 3 is a block diagram showing another main part of the edible body marking device shown in Fig. 1.
Fig. 4 is a diagram showing an example of edible body with a marking pattern formed by the edible body marking device shown in Fig. 1.
Fig. 5 is a diagram showing another example of edible body with a marking pattern formed by the edible body marking device shown in Fig. 1.
Fig. 6 is a diagram showing yet another example of edible body with a marking pattern formed by the edible body marking device shown in Fig. 1.
Fig. 7 is a block diagram showing an outline configuration of a marking information reading system of an embodiment of this invention.
Fig. 8 is a diagram showing an example of conversion table.
Fig. 9 is a diagram showing an example of basic pattern included in the marking pattern.
Fig. 10 is a diagram showing another example of basic pattern included in the marking pattern.

### DETAILED DESCRIPTIONS OF THE PREFERRED EMBODIMENT(S)

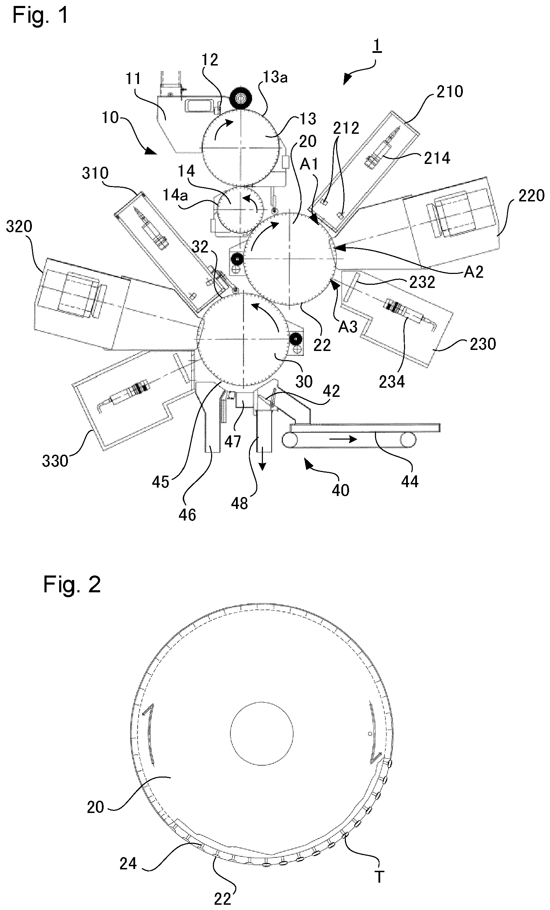

Explained below are embodiments of this invention referring to attached drawings. Fig. 1 is an outline configuration diagram of an edible body marking device of an embodiment of this invention. As shown in Fig. 1, the edible body marking device 1 is provided with a supply device 10 that supplies edible bodies, a first carrying device 20 that receives the edible bodies supplied from the supply device 10 and carries them, a second carrying device 30 that receives edible bodies from the first carrying device 20 and carries them, and a discharge device 40 that receives edible bodies from the second carrying device 30 and discharges them to the outside.

The supply device 10 is provided with a hopper 11 to which injected are fixed-form edible bodies such as tablets, capsules, or empty capsules, a feeder 12 that aligns the edible bodies in the hopper 11, and a supply drum 13 that carries the edible bodies guided by the feeder 12, where the edible bodies are supplied from the supply drum 13 to the first carrying device 20 via an intermediate drum 14. The supply drum 13 and the intermediate drum 14 are provided with a large number of holding parts 13a and 14a comprising recessed parts arranged along the axial and circumferential directions of their cylindrical outer circumferences, and can suction-hold and carry edible bodies accommodated in the holding parts 13a and 14a, respectively.

The first carrying device 20 is formed in a drum shape in the same manner as the supply drum 13 and the intermediate drum 14, and as shown in Fig. 2 with a part cut out, a large number of holding parts 22 that hold edible bodies T are installed with equal intervals along both the circumferential and axial directions. Each of the holding parts 22 has a suction hole 24 formed on its bottom part, and can suction-hold each edible body T accommodated in the holding part 22 through the suction hole 24 by depressurizing the interior of the first carrying device 20 with a vacuum suction device (not shown) and carry the edible body T along the rotational direction of the first carrying device 20 while preventing the orientation of the edible body T from changing while carrying it.

The second carrying device 30 is configured in the same manner as the first carrying device 20, having holding parts 32 formed on its drum-shape outer circumference. Edible bodies carried by the first carrying device 20 are turned front face back when transferred to the second carrying device 30, and are carried to the discharge device 40. Although in this embodiment the first carrying device 20 and the second carrying device 30 are both carrying drums, they can be conveyer devices such as slat conveyers or belt conveyers.

In the edible body marking device 1 provided with the above-mentioned configuration, installed in the vicinity of the first carrying device 20 are a first pre-marking inspection part 210, a first laser processing part 220, and a first marking inspection part 230 sequentially along the carrying direction of the first carrying device 20.

The first pre-marking inspection part 210 is provided with an irradiation part 212 that irradiates an edible body carried to a detection area A1 with illumination light, and an imaging part 214 such as a CCD area camera or CCD line camera that images the edible body irradiated by the irradiation part 212, and pre-inspects the marking target face of the edible body and detects the orientation of a dividing line if marking is performed along the dividing line. If there is no need to pre-inspect the marking target face or detect the orientation of the dividing line of the edible body, a configuration not provided with the first pre-marking inspection part 210 can be adopted.

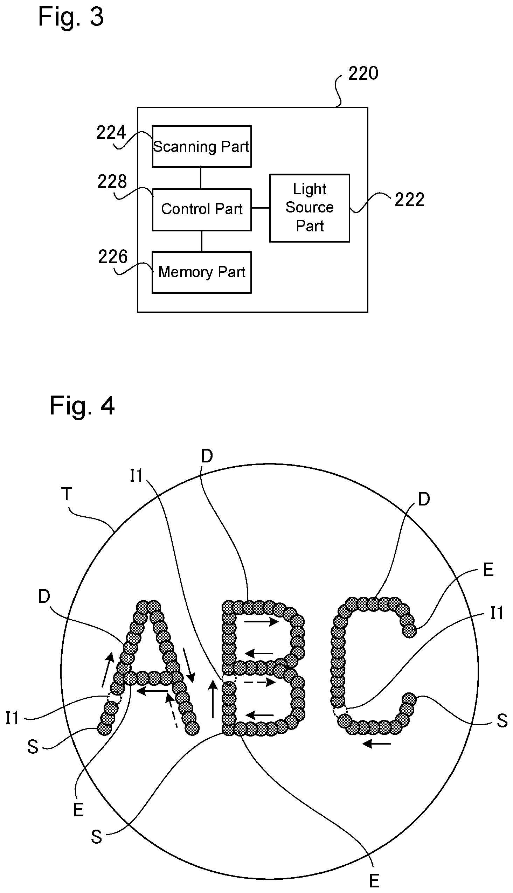

Fig. 3 is a block diagram of the first laser processing part 220. As shown in Fig. 3, the first laser processing part 220 is provided with a light source part 222 that emits laser light, a scanning part 224 that scans laser light emitted from the light source part 222 with a Galvano scanner, a memory part 226 that memorizes information on a marking pattern, and a control part 228 that controls the output of the light source part 222 and the scanning of the scanning part 224, and can form the marking pattern by scanning a laser spot on the marking target face of the edible body carried to a marking area A2. Note that although the memory part 226 is built in the first laser processing part 220, another memory device separate from the first laser processing part 220 can be utilized.

Listed as examples of the laser light emitted from the light source part 222 are solid laser light such as YVO₄ laser light, YLF laser light, and YAG laser light, gas laser light such as excimer laser light and carbon dioxide laser light, and liquid laser light such as dye laser light. Whereas listed as a preferred method of marking an edible body is a method of having the surface of the edible body contain a discoloration-inducing oxide such as titanium oxide, yellow iron sesquioxide, or iron sesquioxide to discolor the surface of the edible body, part of the surface of the edible body can also be shaved to form a marking pattern, and there is no special limitation.

The memory part 226 memorizes basic patterns obtained by forming multiple dots of the laser spot) in specified positions, and additional information added to the basic patterns. Each basic pattern consists of a character (or letter), number, figure, code, or the like so that the consumers can visually recognize information easily, and the marking pattern is configured by adding additional information to each of a single or multiple basic patterns. If the marking pattern is provided with multiple basic patterns, each of the basic patterns can be provided with specific additional information.

The additional information is information that is hard for the consumers to recognize visually, and specifically, information based on the positional information of one or more index dots that are made by modifying or removing part of a plurality of dots constituting the basic pattern or adding one or more new dots to the basic pattern. The details of the additional information are mentioned below.

The first marking inspection part 230 is provided with an irradiation part 232 that irradiates an edible body carried to an inspection area A3 with illumination light, and an imaging part 234 such as a CCD area camera or CCD line camera that images the edible body, and inspects whether the marking pattern is correctly formed. If a marking inspection is performed in a later process or the like, a configuration not provided with the first marking inspection part 230 can be adopted.

Also, installed in the vicinity of the second carrying device 30 are a second pre-marking inspection part 310, a second laser processing part 320, and a second marking inspection part 330 sequentially along the carrying direction of the second carrying device 30. The configurations of the second pre-marking inspection part 310, the second laser processing part 320, and the second marking inspection part 330 are the same as the configurations of the first pre-marking inspection part 210, the first laser processing part 220, and the first marking inspection part 230, respectively. The second carrying device 30 receives edible bodies from the first carrying device 20 and carries them, and the second laser processing part 320 forms a marking pattern on the opposite face of the face where a marking pattern was formed during the carriage by the first carrying device 20. Although the edible body marking device 1 of this embodiment can form marking patterns on both faces of each edible body, if a marking pattern is formed only on one face of each edible body, a configuration not provided with the second carrying device 30, the second pre-marking inspection part 310, the second laser processing part 320, or the second marking inspection 330 can be adopted.

The discharge device 40 is provided with a sorting part 42 that sorts edible bodies based on the marking inspection results in the first marking inspection part 230 and the second marking inspection part 330, and guides only good products to the discharge conveyer 44 and discharges them.

Next, explained is the method to form a marking pattern on edible bodies using the edible body marking device provided with the above-mentioned configuration. Edible bodies such as tablets supplied to the first carrying device 20 from the supply device 10 shown in Fig. 1 are individually accommodated in the holding parts 22, carried to the detection area A1 of the first pre-marking inspection part 210, subjected to a pre-marking inspection, and afterwards carried to the marking area A2 of the first laser processing part 220, and the marking pattern is formed on one face of each edible body.

Fig. 4 is a diagram showing an example of marking pattern formed on an edible body T. In the memory part 226 of the first laser processing part 220, characters "A", "B", and "C" are memorized as three basic patterns to be formed on the edible body, and furthermore numbers "3", "5", and "9" are memorized as pieces of additional information added to the respective basic patterns. Each piece of the added information corresponds to the positional information of an index dot removed from multiple dots constituting each basic pattern in forming the basic pattern on the edible body (*i.e.,* the number of dots until the index dot with the marking starting point S as the 0th dot).

In Fig. 4, the character "A" is configured by forming dots D of laser spots in the order indicated with solid arrows (a broken arrow indicates a non-marking state), where the 3rd dot from the starting point S corresponding to the additional information is removed as an index dot I1 (in Fig. 4 the index dot I1 is shown in a broken line to be distinguished from the ordinary dots D). In the same manner, as for the character "B" the 5th dot from the starting point S is removed as an index dot I1, and as for the character "C" the 9th dot from the starting point S is removed as an index dot I1. The reference point for calculating the number of dots need not be the marking starting point S, but the marking end point E can be made the reference point for example.

Because the marking pattern formed in this manner has only one dot removed as the index dot I1 among the multiple dots D constituting each of the basic patterns, the consumers can recognize this marking pattern as the same thing as the ordinary basic patterns not including the index dot I1 and visually grasp information. Therefore, more information than the ordinary basic patterns can be included in the marking pattern with the additional information without giving a sense of discomfort to the consumers. Also, because the index dots I1 can not only be made inconspicuous in appearance but also change their positions according to the content of the additional information, it becomes difficult for a third party to form the same marking pattern precisely, which is effective as a measure to prevent counterfeit drugs.

Although the index dot I1 for one basic pattern should preferably be single as in this embodiment, if the consumers can recognize the basic pattern without a sense of discomfort, multiple index dots I1 can be set in different positions of the basic pattern. Although numbers in the additional information can themselves be made information on date of manufacture, manufacturing lot, or the like, they can be converted into other numbers, alphabets, characters such as Hiragana, terms and sentences, other codes, or the like based on a conversion table prepared in advance for each basic pattern, allowing many kinds of diverse information to be included as the additional information. The manufacturing lot is a group of edible bodies having the common manufacturing period, manufacturing plant, etc., and by forming the same marking pattern on the edible bodies constituting this group, their distribution route etc. can be quickly and easily identified in case the edible bodies are counterfeited and used as information for preventing counterfeit.

The edible bodies with a marking pattern formed are carried to the inspection area A3 of the first marking inspection part 230 shown in Fig. 1, subjected to a marking inspection, afterwards transferred from the first carrying device 20 to the second carrying device 30, and sequentially carried to the second pre-marking inspection part 310, the second laser processing part 320, and the second marking inspection part 330, thereby forming a marking pattern including additional information on the other face of the edible bodies in the same manner as mentioned above. The additional information included in the marking pattern on the other face of the edible bodies can be the same as or different from the additional information included in the marking pattern on the one face of the edible bodies. Also, the additional information can be installed only on one face of the edible bodies.

Afterwards, the edible bodies are carried from the second carrying device 30 to the discharge device 40, and while edible bodies judged as good products are guided to the discharge conveyer 44 via the sorting part 42, edible bodies judged as defective products are blown out by air in a defective product discharge part 45 to be guided to a defective product discharge chute 46. The defective product discharge confirmation sensor 47 checks whether any edible bodies judged as defective remain on the second carrying device 30, and if any defective edibles body remain, it guides the edible bodies in the sorting part 42 to a discharge chute 48.

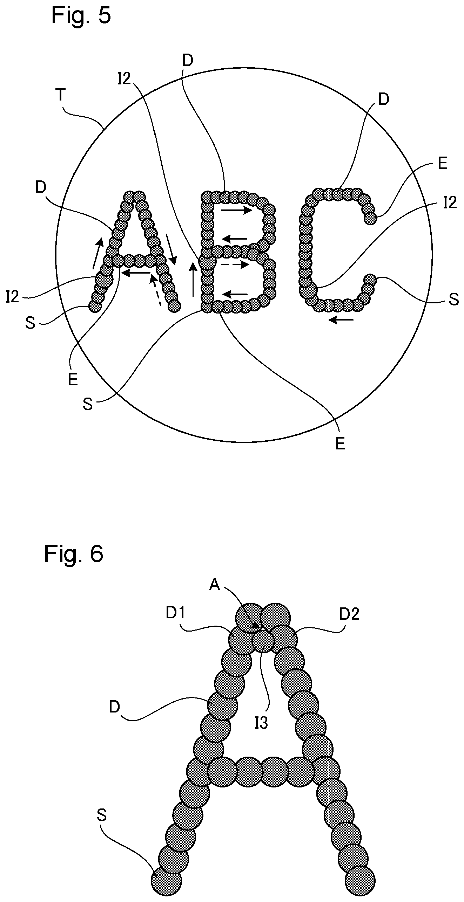

Although the additional information of this embodiment regards a dot removed from multiple dots constituting each basic pattern as the index dot, any of the multiple dots constituting the basic pattern can be deformed and regarded as the index dot. For example, a marking pattern of an edible body T shown in Fig. 5 is made by making the diameter of an index dot I2 larger than the diameter of other dots D, and the positional information of this index dot I2 can be regarded the as the additional information. Also, multiple index dots I2 can be continuously made, thereby part of a character, figure, or the like constituting each basic pattern can be made thicker and regarded as the additional information. The index dot I2 can be deformed into an elliptical shape or the like.

Alternatively, by adding one or more new dots to multiple dots constituting a basic pattern, this added dot can be regarded as the index dot. For example, an edible body marking pattern shown in Fig. 6 is made by adding a new index dot I3 to the vicinity of the apex of character "A" that is a basic pattern, and the positional information of dots D existing in the vicinity of this index dot I3 (*e.g.,* the positional information of dots D1 and D2 in contact with the index dot I3) can be regarded as the additional information. Because dots formed with laser spots can be formed clearly without ink smears as in gravure printing or inkjet printing, as shown in Fig. 6, even when the index dot I3 is formed where dots D are concentrated, a minute unirradiated area A surrounded with the dots D and the index dot I3 can be formed. Thereby, the index dot I3 can be easily distinguished from the dots D, and the presence/absence of the unirradiated area A can be utilized for detecting counterfeit drugs. Other than what is mentioned above, adding the new index dot I3 can also be performed so that a sharp edge is formed at a corner of a character or figure for example.

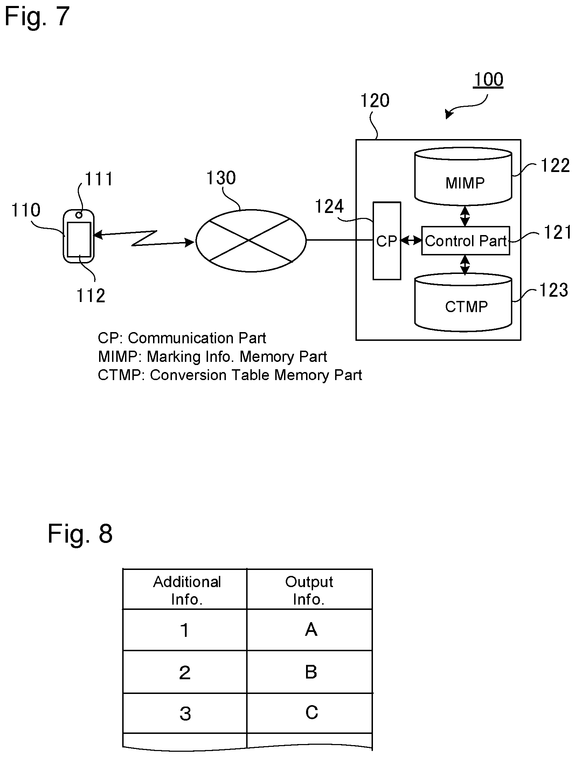

Next explained is a marking information reading system that reads the additional information from an edible body laser-marked by the edible body marking device 1. Fig. 7 is a block diagram showing an outline configuration of the marking information reading system of an embodiment of this invention. As shown in Fig. 7, the marking information reading system 100 is provided with a mobile terminal 110 and a server 120, where the mobile terminal 110 is connected to the server 120 via a network 130.

The mobile terminal 110 is mobile equipment such as a smartphone or tablet owned by the consumer or the like of the edible body, and provided with an imaging part 111 comprising a CCD camera etc., and a display part 112 such as a liquid-crystal panel. The mobile terminal 110 can have a dedicated program downloaded in advance for exchanging information with the server 120.

The server 120 is provided with a control part 121, a marking information memory part 122, a conversion table memory part 123, and a communication part 124. The control part 121 is provided with a CPU, and performs an image processing of imaging data of a marking pattern received from the mobile terminal 110, thereby acquiring the positional information of the index dot of each basic pattern and generating output information.

The marking information memory part 122 memorizes marking information on the marking pattern formed on the edible body. The marking information includes information on the order to form dots constituting each basic pattern of the marking pattern, information on the reference points of the marking pattern, etc., and by the control part 121 referring to the marking information, the imaging data of the marking pattern can be compared with the image data of the basic patterns of the marking pattern to acquire the additional information.

The conversion table memory part 123 memorizes a conversion table for generating output information based on the additional information. The conversion table is a table where characters, numbers, figures, codes, etc. corresponding to the additional information are set in advance, and the control part 121 can convert the additional information to the output information based on the conversion table. Fig. 8 shows an example of the conversion table, where different characters are associated with respective pieces of the additional information comprising the number of dots from the reference point such as the marking starting point to the index dot. The output information corresponding to the additional information is not necessarily limited to a single character, figure, or the like, but can be terms, sentences, or the like regarding the efficacy or the like.

In the marking information reading system 100 provided with the above-mentioned configuration, once a consumer or the like images a marking pattern formed on an edible body with the imaging part 111 of the mobile terminal 110 and sends it to the server 120, the control part 121 of the server 120 can acquire additional information based on the imaging data of the marking pattern, convert them to output information, and have the output information displayed on the display part 112 of the mobile terminal 110. Therefore, the consumer or the like can quickly and easily grasp the content of the additional information (e.g., specific information for the edible body such as the date of manufacture and the manufacturing lot) included in the marking pattern. Because the additional information is acquired based on marking information memorized in the marking information memory part 122 of the server 120, it is difficult for a third party without the marking information grasped to acquire the additional information, which is effective as a measure to prevent counterfeit drugs. The additional information can include a security code, the security code acquired by the control part 121 from the imaging data of the marking pattern can be compared with a security code included in the marking information stored in advance in the marking information memory part 122, thereby the authenticity of the edible body can be judged.

If multiple marking patterns are formed on an edible body, the conversion table memorized in the conversion table memory part 123 can be set individually for each marking pattern, and if multiple index dots are included in each marking pattern, by combining the multiple marking patterns and the multiple index dots, many kinds of diverse information can be made output information. On the other hand, the additional information as it is can also be displayed on screen as output information, in which case a configuration not provided with a conversion table can be adopted.

Although the marking information reading system 100 of this embodiment is configured with the mobile terminal 110 and the server 120 connected through the network 130, by having the memory of the mobile terminal 110, an external hard disk, or the like memorize the marking information and the conversion table memorized in the marking information memory part 122 and the conversion table memory part 123, the marking information reading system 100 can be given a standalone-type configuration.

As mentioned above, each basic pattern included in the marking pattern can be a figure or the like so that the consumers can visually recognize information easily. By making the basic pattern a nonverbal display (e.g., a figure such as a pictogram) expressing at least one of the "efficacy" and the "human body part or organ" to which the efficacy applies when the edible body with the basic pattern displayed is taken, regardless of the language used, age, or the like of the consumers, the efficacy, use, etc. of the edible body can be easily and securely communicated to the consumers. Thereby, accidental ingestion and misuse of the edible body can also be prevented, and an auxiliary effect for informed consent can also be expected from the viewpoint of medication.

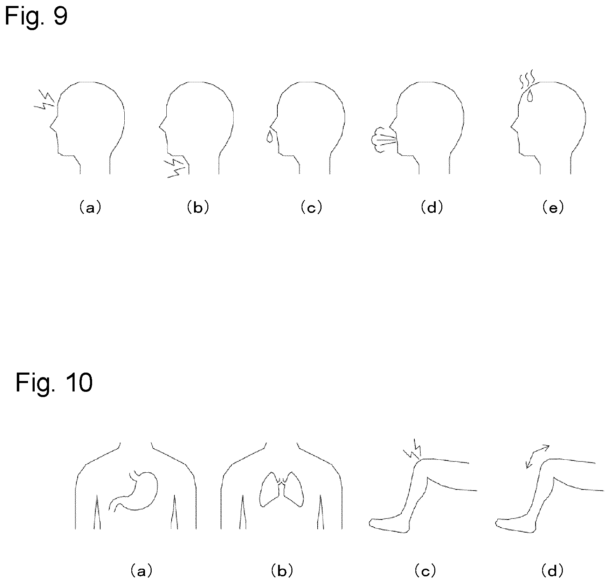

Shown in (a)~(e) of Fig. 9 are specific examples of the basic patterns showing the "efficacies" of edible bodies, where the efficacies are shown to apply to (a) headache, (b) sore throat, (c) nasal ingestion, (d) coughing, or (e) fever. Also, (a)~(d) of Fig. 10 show specific examples of the basic patterns showing the "human body part or organ" to which the efficacies of the edible bodies apply, where their efficacies apply to the (a) stomach, (b) lungs, (c) knees (pain), or (d) knees (range of motion). The basic patterns shown in (a)~(e) of Fig. 9 and (a)~(d) of Fig. 10 can be used individually as standalone or by appropriately combining these basic patterns.

### Reference Signs List

1: Edible body marking device
100: Marking information reading system
110: Mobile terminal
111: Imaging part
112: Display part
120: Server
121: Control part
122: Marking information memory part
123: Conversion table memory part
T: Edible body
I1, I2, I3: Index dots

## Claims

1. An edible body marking device (1) that forms a marking pattern on an edible body by scanning a laser spot on the marking target face of the edible body carried to a marking area (A2), comprising a light source part (222) that emits laser light, a scanning part (224) that scans laser light emitted from the light source part (222) with a galvano scanner, a memory part (226) that memorizes information on a marking pattern, and a control part (121, 228) that controls the output of the light source part (222) and the scanning of the scanning part (224), wherein
the marking pattern includes, as additional information, positional information of one or more index dots that are made by partially deforming one or more dots of the laser spot, with respect to a basic pattern that is obtained by forming a plurality of the dots of the laser spot, and
part of one of a character, a number, a figure, and a code constituting the basic pattern is made thicker by making the multiple index dots continuously and regarded as the additional information.

2. The edible body marking device (1) according to Claim 1, wherein
the additional information is information based on the number of the dots that are counted from a marking reference point to the one or more index dots of the basic pattern.

3. The edible body marking device (1) according to any of Claim 1 or Claim 2, wherein
the marking pattern includes other basic patterns so that the marking pattern is provided with a plurality of the basic patterns, each of which includes unique additional information that is different from other additional information.

4. A laser-marked edible body on which the marking pattern is formed by the edible body marking device (1) according to Claim 1, wherein
the marking pattern includes, as additional information, positional information of one or more index dots that are made by partially deforming one or more dots of the laser spot with respect to a basic pattern that is obtained by forming a plurality of the dots of the laser spot, and
part of one of a character, a number, a figure, and a code constituting the basic pattern is made thicker by making the multiple index dots continuously and regarded as the additional information.

5. An edible body marking information reading system (100) that reads the additional information of the laser-marked edible body on which the marking pattern is formed by the edible body marking device (1) according to Claim 1, comprising:
an imaging part (111) that images the marking pattern of the edible body,
a control part (121, 228) that acquires the additional information based on imaging data of the marking pattern, and
a display part (112) that displays output information based on the additional information acquired from the imaging data.

6. The marking information reading system (100) according to Claim 5, further comprising:
a marking information memory part (122) that memorizes marking information including information regarding a forming order of dots constituting the basic pattern, wherein
the control part (121, 228) acquires the additional information based on the number of the dots that are counted from a marking reference point to the one and more index dots of the basic pattern by referring to the marking information.

7. The marking information reading system (100) according to any of Claim 5 or Claim 6, further comprising:
a conversion table memory part (123) that memorizes a conversion table to convert the additional information to the output information, wherein
the control part (121, 228) converts the acquired additional information to the output information based on the conversion table.

8. A manufacturing lot that comprises a group of the laser-marked edible bodies according to Claim 4, wherein
the marking pattern that is formed on each of the edible bodies constituting the group is the same.

9. A marking method for forming a marking pattern on an edible body by the edible body marking device (1) according to Claim 1, wherein
the marking pattern includes, as additional information, positional information of one or more index dots that are made by partially deforming one or more dots of the laser spot with respect to a basic pattern that is obtained by forming a plurality of the dots of the laser spot, and
part of one of a character, a number, a figure, and a code constituting the basic pattern is made thicker by making the multiple index dots continuously and regarded as the additional information.

## Patentansprüche

1. Vorrichtung zur Markierung eines essbaren Körpers (1), die ein Markierungsmuster auf einem essbaren Körper bildet, durch Abtasten eines Laserflecks auf der Markierungszielfläche des essbaren Körpers, der zu einem Markierungsbereich (A2) transportiert wird, umfassend einen Lichtquellenteil (222), der Laserlicht emittiert, einen Abtastteil (224), der Licht, das von dem Lichtquellenteil (222) emittiert wird, mit einer Galvano-Abtasteinrichtung abtastet, einen Speicherteil (226), der Informationen über ein Markierungsmuster speichert, und einen Steuerteil (121, 228), der die Ausgabe des Lichtquellenteils (222) und das Abtasten des Abtastteils (224) steuert, wobei
das Markierungsmuster als zusätzliche Informationen Positionsinformationen eines oder mehrerer Indexpunkte aufweist, die durch teilweises Verformen eines oder mehrerer Punkte des Laserflecks in Bezug auf ein Grundmuster erzeugt werden, das durch Bilden mehrerer der Punkte des Laserflecks erhalten wird, und
ein Teil eines Zeichens, einer Zahl, einer Abbildung oder eines Codes, die das Grundmuster bilden, dicker erzeugt wird durch kontinuierliches Erzeugen der mehreren Indexpunkte und deren Betrachtung als zusätzliche Informationen.

2. Vorrichtung zur Markierung eines essbaren Körpers (1) nach Anspruch 1, wobei
die zusätzlichen Informationen auf der Anzahl der Punkte basieren, die von einem Markierungsbezugspunkt bis zu dem einen oder den mehreren Indexpunkten des Grundmusters gezählt werden.

3. Vorrichtung zur Markierung eines essbaren Körpers (1) nach Anspruch 1 oder Anspruch 2, wobei
das Markierungsmuster weitere Grundmuster aufweist, sodass das Markierungsmuster mit mehreren Grundmustern bereitgestellt wird, von denen jedes eindeutige zusätzliche Informationen aufweist, die sich von anderen zusätzlichen Informationen unterscheiden.

4. Lasermarkierter essbarer Körper, auf dem das Markierungsmuster durch die Vorrichtung zur Markierung eines essbaren Körpers (1) nach Anspruch 1 gebildet ist, wobei
das Markierungsmuster als zusätzliche Informationen Positionsinformationen eines oder mehrerer Indexpunkte aufweist, die durch teilweises Verformen eines oder mehrerer Punkte des Laserflecks in Bezug auf ein Grundmuster erzeugt werden, das durch Bilden mehrerer der Punkte des Laserflecks erhalten wird, und
ein Teil eines Zeichens, einer Zahl, einer Abbildung oder eines Codes, die das Grundmuster bilden, dicker erzeugt wird durch kontinuierliches Erzeugen der mehreren Indexpunkte und deren Betrachtung als zusätzliche Informationen.

5. Lesesystem für Markierungsinformationen eines essbaren Körpers (100), das die zusätzlichen Informationen des lasermarkierten essbaren Körpers liest, auf dem das Markierungsmuster durch die Vorrichtung zur Markierung eines essbaren Körpers (1) nach Anspruch 1 gebildet ist, umfassend:
einen Bildgebungsteil (111), der das Markierungsmuster des essbaren Körpers abbildet,
einen Steuerteil (121, 228), der die zusätzlichen Informationen basierend auf Bildgebungsdaten des Markierungsmusters gewinnt, und
einen Anzeigeteil (112), der Ausgabeinformationen basierend auf den zusätzlichen Informationen anzeigt, die aus den Bildgebungsdaten gewonnen wurden.

6. Markierungsinformationslesesystem (100) nach Anspruch 5, ferner umfassend:
einen Markierungsinformationsspeicherteil (122), der Markierungsinformationen speichert, die Informationen bezüglich einer Bildungsreihenfolge von Punkten umfassen, die das Grundmuster bilden, wobei
der Steuerteil (121, 228) die zusätzlichen Informationen basierend auf der Anzahl der Punkte gewinnt, die von einem Markierungsbezugspunkt bis zu dem einen und den mehreren Indexpunkten des Grundmusters gezählt werden, wobei auf die Markierungsinformationen Bezug genommen wird.

7. Markierungsinformationslesesystem (100) nach Anspruch 5 oder Anspruch 6, ferner umfassend:
einen Umwandlungstabellen-Speicherteil (123), der eine Umwandlungstabelle speichert, um die zusätzlichen Informationen in die Ausgabeinformationen umzuwandeln, wobei
der Steuerteil (121, 228) die gewonnenen zusätzlichen Informationen basierend auf der Umwandlungstabelle in die Ausgabeinformationen umwandelt.

8. Fertigungscharge, umfassend eine Gruppe der lasermarkierten essbaren Körper nach Anspruch 4, wobei
das Markierungsmuster, das auf jedem der essbaren Körper gebildet ist, die die Gruppe bilden, das gleiche ist.

9. Markierungsverfahren zum Bilden eines Markierungsmusters auf einem essbaren Körper durch die Vorrichtung zur Markierung eines essbaren Körpers (1) nach Anspruch 1, wobei
das Markierungsmuster als zusätzliche Informationen Positionsinformationen eines oder mehrerer Indexpunkte aufweist, die durch teilweises Verformen eines oder mehrerer Punkte des Laserflecks in Bezug auf ein Grundmuster erzeugt werden, das durch Bilden mehrerer der Punkte des Laserflecks erhalten wird, und
ein Teil eines Zeichens, einer Zahl, einer Abbildung oder eines Codes, die das Grundmuster bilden, dicker erzeugt wird durch kontinuierliches Erzeugen der mehreren Indexpunkte und deren Betrachtung als zusätzliche Informationen.

## Revendications

1. Dispositif de marquage de corps comestible (1) qui forme un motif de marquage sur un corps comestible en balayant un spot laser sur la face cible de marquage dudit corps comestible amené dans une zone de marquage (A2), comprenant une partie source de lumière (222) qui émet une lumière laser, une partie de balayage (224) qui balaye la lumière laser émise par la partie source de lumière (222) à l'aide d'un scanner galvanométrique, une partie mémoire (226) qui mémorise des informations relatives à un motif de marquage, et une partie de commande (121, 228) qui commande la sortie de la partie source de lumière (222) et le balayage de la partie de balayage (224), dans lequel
le motif de marquage comporte, en tant qu'informations supplémentaires, des informations de position d'un ou plusieurs points d'index qui sont formés en déformant partiellement un ou plusieurs points du spot laser par rapport à un motif de base obtenu en formant une pluralité de points du spot laser, et
une partie d'un caractère, d'un chiffre, d'une figure ou d'un code constituant le motif de base est épaissie en formant les plusieurs points d'index de manière continue et considérée comme étant les informations supplémentaires.

2. Dispositif de marquage de corps comestible (1) selon la revendication 1, dans lequel
les informations supplémentaires sont des informations basées sur le nombre de points comptés depuis un point de référence de marquage jusqu'auxdits un ou plusieurs points d'index du motif de base.

3. Dispositif de marquage de corps comestible (1) selon l'une quelconque des revendications 1 ou 2, dans lequel
le motif de marquage comporte d'autres motifs de base, de sorte que le motif de marquage comporte une pluralité de motifs de base, dont chacun comporte des informations supplémentaires uniques qui diffèrent des autres informations supplémentaires.

4. Corps comestible marqué au laser sur lequel le motif de marquage est formé par le dispositif de marquage de corps comestible (1) selon la revendication 1, dans lequel
le motif de marquage comporte, en tant qu'informations supplémentaires, des informations de position d'un ou plusieurs points d'index qui sont formés en déformant partiellement un ou plusieurs points du spot laser par rapport à un motif de base obtenu en formant une pluralité de points du spot laser, et
une partie d'un caractère, d'un chiffre, d'une figure ou d'un code constituant le motif de base est épaissie en formant les plusieurs points d'index de manière continue et considérée comme étant les informations supplémentaires.

5. Système de lecture d'informations de marquage de corps comestible (100) qui lit les informations supplémentaires du corps comestible marqué au laser sur lequel le motif de marquage est formé par le dispositif de marquage de corps comestible (1) selon la revendication 1, comprenant :
une partie d'imagerie (111) qui reproduit le motif de marquage du corps comestible,
une partie de commande (121, 228) qui acquiert les informations supplémentaires sur la base des données d'imagerie du motif de marquage, et
une partie d'affichage (112) qui affiche des informations de sortie sur la base des informations supplémentaires acquises à partir des données d'imagerie.

6. Système de lecture d'informations de marquage (100) selon la revendication 5, comprenant en outre :
une partie mémoire d'informations de marquage (122) qui mémorise des informations de marquage comportant des informations concernant un ordre de formation des points constituant le motif de base, dans lequel
la partie de commande (121, 228) acquiert les informations supplémentaires sur la base du nombre de points comptés depuis un point de référence de marquage jusqu'auxdits un ou plusieurs points d'index du motif de base, en se référant aux informations de marquage.

7. Système de lecture d'informations de marquage (100) selon l'une quelconque des revendications 5 ou 6, comprenant en outre :
une partie mémoire de table de conversion (123) qui mémorise une table de conversion permettant de convertir les informations supplémentaires en informations de sortie, dans lequel
la partie de commande (121, 228) convertit les informations supplémentaires acquises en informations de sortie sur la base de la table de conversion.

8. Lot de fabrication comprenant un groupe de corps comestibles marqués au laser selon la revendication 4, dans lequel
le motif de marquage formé sur chacun des corps comestibles constituant le groupe est identique.

9. Procédé de marquage pour former un motif de marquage sur un corps comestible à l'aide du dispositif de marquage de corps comestible (1) selon la revendication 1, dans lequel
le motif de marquage comporte, en tant qu'informations supplémentaires, des informations de position d'un ou plusieurs points d'index qui sont formés en déformant partiellement un ou plusieurs points du spot laser par rapport à un motif de base obtenu en formant une pluralité de points du spot laser, et
une partie d'un caractère, d'un chiffre, d'une figure ou d'un code constituant le motif de base est épaissie en formant les plusieurs points d'index de manière continue et considérée comme étant les informations supplémentaires.
